# FASCICULE DE BREVET EUROPEEN

(11) **EP 2 354 000 B1**
(45) Date de publication et mention de la délivrance du brevet: **04.07.2012**
(21) Numéro de dépôt: 11290030.3
(22) Date de dépôt: 19.01.2011
(51) Int. Cl.: B64D 1/10, B64D 1/12, B64D 1/02

(54) **Système d'emport de charge pour avion de transport**
Haltesystem für Lasten für Transportflugzeuge
Load carrying system for transport aircraft

(30) Priorité: 26.01.2010 FR 1050488
(43) Date de publication de la demande: 10.08.2011
(73) Titulaire: MBDA France, 75016 Paris (FR)
(72) Inventeur: Jaurand, Benoît, 92170 Vanves (FR)
(74) Mandataire: Hauer, Bernard

(56) Documents cités:
- GB-A- 1 074 825
- GB-A- 2 292 998
- US-A- 4 161 301
- US-A- 4 256 012
- US-A- 5 763 811

## Description

La présente invention concerne un système d'emport de charge pour un avion de transport.

Dans le cadre de la présente invention, on entend par charge tout objet susceptible d'être emporté par un avion, et éventuellement largué à partir de cet avion. Il peut s'agir notamment de drones, de fret,... De préférence, une charge correspond à une munition qui, dans le cadre de l'invention, représente un projectile de type missile ou bombe. Généralement, ce projectile fait partie d'un système d'arme usuel à charge militaire et est doté d'un système de propulsion et de moyens de guidage susceptibles de le faire voler et de le guider vers une cible à endommager ou à détruire. Il peut notamment s'agir d'une bombe guidée ou d'un missile de croisière.

Bien que non exclusivement, la présente invention s'applique plus particulièrement à un système d'emport et de largage en vol, destiné à un avion de transport militaire, dans lequel l'emport d'un missile est réalisé dans la soute de l'avion et le largage est mis en oeuvre par une ouverture prévue à l'arrière de l'avion.

Généralement, un système d'emport de charge comporte des conteneurs, dont chacun contient une ou plusieurs charges.

Ces conteneurs sont installés dans la soute de l'aéronef, soit à poste fixe, soit sur des moyens de coulissement qui permettent de les déplacer dans la soute. Le plus souvent ces conteneurs sont adaptés aux charges à transporter et éventuellement au type d'avion. Un tel système d'emport est donc complexe avec, en général, de nombreux conteneurs différents et de nombreux moyens de liaison pour fixer les conteneurs au fuselage de l'avion. La complexité est accrue si ce système doit, de plus, permettre un largage en vol de certaines charges.

Cette complexité présente de nombreux inconvénients, et notamment un cout élevé et une charge de travail importante pour l'installer et également pour rendre à l'avion sa configuration initiale si nécessaire.

Par ailleurs, par le document GB-2 292 998, on connaît un système d'emport de charge pour un avion de transport. Ce système comporte un premier conteneur qui est susceptible de recevoir au moins une charge et un second conteneur qui est susceptible d'être fixé dans la soute de l'avion de transport. Le premier conteneur est agencé dans le second conteneur de manière à pouvoir être déplacé longitudinalement et être amené de l'une à l'autre des positions suivantes :
- une première position, dans laquelle il est situé à l'intérieur dudit conteneur externe ; et
- une seconde position, dans laquelle il est décalé longitudinalement par rapport à cette première position.

La présente invention concerne un système d'emport de charge pour un avion de transport, qui a pour objet de remédier aux inconvénients précités.

A cet effet, selon l'invention, ledit système du type comportant au moins un conteneur dit interne qui est susceptible de recevoir au moins une charge, est remarquable en ce qu'il comporte, de plus, un conteneur dit externe qui est susceptible d'être fixé, directement et complètement, dans la soute de l'avion de transport, et en ce que ledit conteneur interne est agencé dans ledit conteneur externe de manière à pouvoir être déplacé longitudinalement et être amené de l'une à l'autre des positions suivantes :
- une première position, dans laquelle il est entièrement situé à l'intérieur dudit conteneur externe ; et
- une seconde position, dans laquelle il est décalé longitudinalement vers l'arrière de l'aéronef par rapport à ladite première position, de sorte qu'une partie dudit conteneur interne est alors située à l'extérieur dudit conteneur externe et à l'extérieur de l'avion de transport au travers d'une ouverture à l'arrière de la soute.

Avantageusement, ledit conteneur interne est monté à l'intérieur dudit conteneur externe à l'aide de premiers moyens de coulissement qui sont susceptibles de déplacer ledit conteneur interne entre lesdites première et seconde positions.

Ainsi, comme grâce à l'invention, le système d'emport de charge comporte un unique conteneur externe qui est muni de tous les moyens nécessaires à l'emport et au déchargement (notamment un ou plusieurs conteneurs internes et des moyens de coulissement associés), il suffit d'installer ce conteneur externe dans l'avion pour pouvoir mettre en oeuvre l'invention. Par conséquent, le système conforme à l'invention est simple, il peut être réalisé et installé rapidement, et il ne nécessite pas une modification importante de l'avion de transport utilisé.

De plus, la présente invention peut être prévue sur tout type d'avion de transport, et n'est pas limitée à une charge particulière.

En outre, si on prévoit des moyens de liaison du conteneur externe sur le fuselage interne de l'avion de transport, qui sont facilement démontables, on peut rendre à l'avion, rapidement et à coût réduit, sa configuration initiale de sorte qu'il puisse remplir d'autres types de missions, tels que le transport de troupes et/ou de véhicules.

Par ailleurs, avantageusement, le système conforme à l'invention comporte, de plus, des seconds moyens de coulissement qui sont susceptibles d'amener ladite charge dans la partie dudit conteneur interne qui est située à l'extérieur de l'avion de transport dans ladite seconde position.

En outre, de façon avantageuse, ledit conteneur interne comprend une cage munie de compartiments susceptibles de recevoir une pluralité de charges, identiques ou différentes, ce qui permet de disposer d'une souplesse opérationnelle. Ces compartiments peuvent être agencés en rangées et/ou en colonnes. De plus, chaque compartiment peut contenir longitudinalement plusieurs charges, si les tailles respectives le permettent.

Par ailleurs, de façon avantageuse, ledit système comporte, de plus, un dispositif de commande qui est apte à commander au moins lesdits (premiers et seconds) moyens de coulissement, et qui est installé dans une zone dédiée de l'avion de transport, qui peut être pressurisée.

Dans un mode de réalisation préféré, le système conforme à l'invention est destiné à l'emport, mais également au largage en vol, d'au moins une charge. Dans ce mode de réalisation préféré, la partie du conteneur interne, qui est située à l'extérieur de l'avion de transport dans ladite seconde position, et dans laquelle est susceptible d'être amenée une charge à l'aide desdits seconds moyens de coulissement, est une partie dite de largage, d'où la charge peut être larguée (en vol) de l'avion de transport.

Ainsi, grâce à ce mode de réalisation préféré, la partie de largage du conteneur interne, où peut être amenée une charge, est déplacée à l'extérieur de l'avion de transport, de sorte que cette charge peut alors être larguée en vol sans utiliser de moyen d'extraction, et en particulier sans utiliser de parachute. On obtient ainsi, notamment, les avantages suivants :
- une absence de ralentissement de la charge après le largage, ce qui permet, dans le cas d'un missile, de rester dans le domaine de pilotabilité du missile et de démarrage du moteur. Dans cette situation, l'intégration d'un système de ré-accélération du missile n'est pas indispensable ;
- aucun équipement n'est largué, contrairement à un largage par parachute, ce qui permet d'obtenir une certaine discrétion opérationnelle ; et
- comme la partie de largage du conteneur interne est située à l'extérieur de l'avion de transport, les risques de collision avec ce dernier sont fortement diminués, et on obtient un domaine de largage beaucoup plus étendu.

Dans la position de largage, la charge est larguée de préférence par simple lâcher. Toutefois, dans le cadre de la présente invention, le largage peut également être réalisé (dans cette position de largage) par éjection ou par éjection et lâcher.

De façon avantageuse, lesdits seconds moyens de coulissement comportent des rails fixés sur le conteneur interne et pourvus d'un dispositif d'éjection qui est susceptible de coulisser sur lesdits rails et qui est apte à supporter la charge lors de l'emport et à la libérer (par lâcher et/ou éjection) lors du largage. Ainsi, on peut utiliser un dispositif d'éjection qui est similaire à un dispositif d'éjection usuel, employé lors de l'emport et du largage d'une munition sur un avion de chasse. Ceci permet d'utiliser les points d'emport existants habituellement sur les munitions et limite donc les modifications à apporter à ces dernières.

En outre, avantageusement :
- les rails sont fixés sur les côtés internes du conteneur interne, afin de ne pas gêner le largage des charges d'un étage supérieur lorsque le conteneur interne comporte plusieurs étages superposés ; et
- le système conforme à l'invention comporte, pour chaque charge, des seconds moyens de coulissement dédiés. Ainsi, en prévoyant des seconds moyens de coulissement adaptés au type de charge utilisé, on peut emporter et larguer différents types de charge à l'aide d'un seul et même conteneur interne, ce qui permet notamment d'augmenter les capacités opérationnelles.

La présente invention concerne également un avion de transport (militaire) qui comporte un système d'emport (et éventuellement de largage) tel que celui précité.

Les figures du dessin annexé feront bien comprendre comment l'invention peut être réalisée. Sur ces figures, des références identiques désignent des éléments semblables.

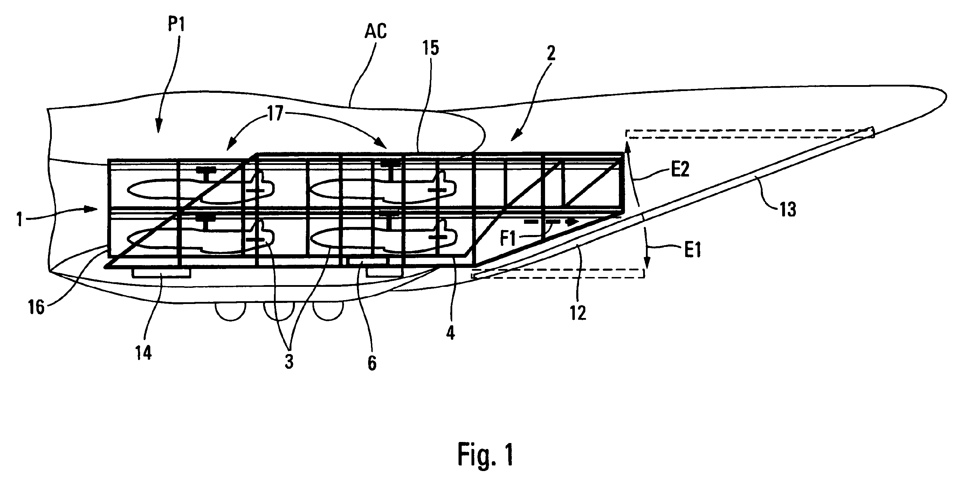

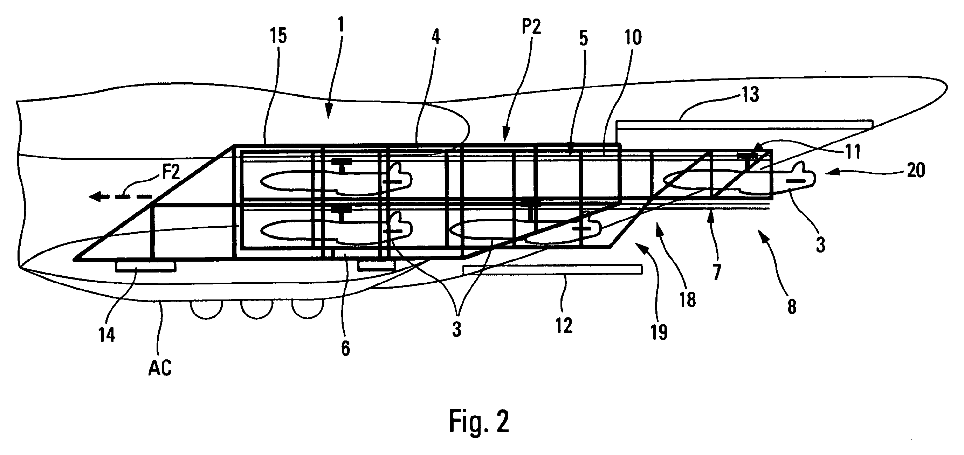

Les figures 1 et 2 montrent schématiquement un système conforme à l'invention qui est monté sur un avion de transport, respectivement dans une position d'emport et dans une position de déchargement, notamment de largage en vol.

Le système 1 conforme à l'invention et représenté schématiquement sur les figures 1 et 2 est destiné à être installé dans la soute 2 d'un avion de transport AC, notamment d'un avion de transport militaire lourd, et il est destiné à emporter (et éventuellement à larguer en vol) des charges qui représentent, à titre d'exemple préféré, des munitions 3 dans la description suivante.

Une munition 3 correspond à un projectile qui fait partie d'un système d'arme usuel à charge militaire et qui est doté de moyens de propulsion usuels et de moyens de guidage usuels susceptibles de le faire voler et de le guider vers une cible à endommager ou à détruire. Il peut notamment s'agir d'une bombe guidée ou d'un missile de croisière.

Ledit système 1 comporte au moins un conteneur interne 4 qui est agencé dans la soute 2 de l'avion de transport AC et qui est susceptible de recevoir au moins une munition 3. Dans l'exemple des figures 1 et 2, ledit conteneur interne 4 comporte huit munitions 3, à savoir deux groupes de quatre munitions 3, montés côte à côte, dont un seul groupe est visible sur ces figures 1 et 2. Chaque munition 3 est montée à l'intérieur du conteneur interne 4 de manière à pouvoir coulisser à l'aide de moyens de coulissement 5 précisés ci-dessous.

Selon l'invention, ledit système d'emport de charge 1 comporte, de plus, un conteneur externe 15 qui est susceptible d'être fixé, directement et complètement, dans la soute 2 de l'avion de transport AC. De plus, selon l'invention, ledit conteneur interne 4 est agencé à l'intérieur dudit conteneur externe 15, et ceci de manière à pouvoir être déplacé longitudinalement dans ce dernier à l'aide de moyens de coulissement 6 comprenant, par exemple, des rails fixés sur le conteneur externe 15, qui coopèrent avec des moyens solidaires du conteneur interne 4.

Plus précisément, ledit conteneur interne 4 est susceptible d'être amené, à l'aide des moyens de coulissement 6, d'une position avant P1 représentée sur la figure 1 vers une position arrière P2 représentée sur la figure 2, dans le sens illustré par une flèche F1, et de cette position P2 de nouveau dans la position P1 dans le sens illustré par une flèche F2. Ces positions P1 et P2 correspondent, respectivement, à :
- une position P1 d'emport, dans laquelle le conteneur interne 4 est entièrement situé à l'intérieur du conteneur externe 15 et donc de la soute 2 ; et
- une position P2 de déchargement, dans laquelle le conteneur interne 4 est décalé longitudinalement vers l'arrière de l'aéronef AC par rapport à ladite première position P1, de sorte qu'une partie 7 dudit conteneur interne 4 est alors située à l'extérieur dudit conteneur externe 15 et à l'extérieur de l'avion de transport AC au travers d'une ouverture 8 à l'arrière de la soute 2.

Ainsi, comme le système 1 conforme à l'invention comporte un unique conteneur externe 15 qui est muni de tous les moyens nécessaires à l'emport et au déchargement (notamment un ou plusieurs conteneurs internes 4 et des moyens de coulissement 6 associés), il suffit d'installer ce conteneur externe 15 dans l'avion AC pour pouvoir mettre en oeuvre l'invention. Par conséquent, on obtient un système 1 qui est simple, qui peut être réalisé et installé rapidement, et qui ne nécessite pas une modification importante de l'avion de transport AC utilisé.

De plus, il peut être prévu sur tout type d'avion de transport, et n'est pas limité à un type particulier de munition ou de charge.

En outre, si on prévoit des moyens de liaison 14 (représentés schématiquement) pour fixer le conteneur externe 15 sur le fuselage interne de l'avion de transport AC, qui sont facilement démontables, on peut rendre à l'avion AC, rapidement et à coût réduit, sa configuration initiale de sorte qu'il puisse remplir d'autres types de missions, tels que le transport de troupes et/ou de véhicules.

De plus, lesdits moyens de coulissement 5 sont formés de manière à pouvoir amener les munitions 3 qui sont situées dans le conteneur interne 4 dans ladite partie 7.

Par ailleurs, ledit système 1 comporte, de plus, un dispositif (non représenté) de commande du largage qui est apte à commander, notamment, lesdits moyens de coulissement 6 et lesdits moyens de coulissement 5, suite à des commandes engendrées par un opérateur, et qui est installé dans une zone dédiée de l'avion de transport AC, qui peut être pressurisée.

Dans un mode de réalisation particulier, ledit conteneur interne 4 comprend une cage 16 qui est munie de compartiments 17 qui sont susceptibles de recevoir chacun une ou plusieurs munitions 3. Ces compartiments 17 peuvent être agencés en rangée et/ou en colonnes. Dans l'exemple des figures 1 et 2, le conteneur interne 4 comprend deux ensembles de compartiments agencés en rangée l'un au-dessus de l'autre.

Dans un mode de réalisation préféré, le système 1 conforme à l'invention est destiné non seulement à l'emport, mais également au largage en vol, d'au moins une munition 3. Dans ce mode de réalisation particulier, la partie 7 du conteneur interne 4, qui est située à l'extérieur de l'avion de transport AC dans la position P2, et dans laquelle est susceptible d'être amenée une munition 3 à l'aide desdits moyens de coulissement 5, est une partie dite de largage, d'où la munition 3 peut être larguée en vol de l'avion de transport AC.

Dans ce mode de réalisation préféré, lesdits moyens de coulissement 5 comportent des rails 10 fixés sur le conteneur interne 4 et pourvus d'un dispositif d'éjection 11 qui est susceptible de coulisser sur lesdits rails 10 et qui est apte à supporter la munition 3 lors de l'emport et à la libérer lors du largage.

Par conséquent, pour réaliser le largage en vol de munitions 3 emportées par le système 1 conforme à l'invention, on met en oeuvre les opérations suivantes :
- à partir de la position P1 d'emport, c'est-à-dire la position qui est utilisée lors des phases de vol (décollage, phase de croisière,...) autres que la phase de largage, pour laquelle le conteneur interne 4 est situé complètement à l'intérieur du conteneur externe 15 et les portes 12 et 13 à l'arrière de l'avion sont fermées, on commande, de façon usuelle, une ouverture desdites portes 12 et 13 (en les faisant pivoter comme illustré par des flèches E1 et E2 sur la figure 1 pour les amener dans les positions représentées en traits interrompus sur cette figure 1 et former l'ouverture 8), et on commande, à l'aide du dispositif de commande du largage, les moyens de coulissement 6 pour engendrer un déplacement de l'ensemble du conteneur interne 4 longitudinalement vers l'arrière de l'avion AC dans le sens illustré par la flèche F1 ;
- lorsque le conteneur interne 4 se trouve dans la position P2, pour laquelle la partie de largage 7 est située hors de l'avion AC, on amène une munition 3 dans cette partie de largage 7, à l'aide desdits moyens de coulissement 5 (et du dispositif de commande du largage), et dans cette position, on commande le dispositif d'éjection 11 pour qu'il libère (par lâcher et/ou éjection) la munition 3 ;
- on peut réaliser l'étape précédente pour une seule munition 3, ou bien la répéter pour certaines ou l'ensemble des munitions 3 contenues dans le conteneur interne 4 ; et
- lorsque les munitions 3 que l'on désirait larguer l'ont été, le conteneur interne 4 peut être ramené dans sa position P1 dans le sens illustré par la flèche F2 et les portes 12 et 13 peuvent être refermées.

Ainsi, comme, dans ce mode de réalisation préféré, la partie de largage 7 du conteneur interne 4 peut être déplacée à l'extérieur de l'avion de transport AC, une munition 3 (amenée dans cette partie de largage 7) peut être larguée, sans avoir à utiliser de moyen d'extraction tel qu'un parachute par exemple.

Par conséquent, grâce à ce mode de réalisation préféré du système 1 conforme à l'invention, on obtient notamment les avantages suivants :
- une absence de ralentissement de la munition 3 après le largage, ce qui permet, dans le cas d'un missile, de rester dans le domaine de pilotabilité du missile et de démarrage de son moteur. Dans cette situation, l'intégration d'un système de ré-accélération du missile n'est pas indispensable ;
- aucun équipement n'est largué, contrairement à un largage par parachute, ce qui permet d'obtenir une certaine discrétion opérationnelle ; et
- comme, lors du largage, la partie de largage 7 du conteneur interne 4 est située à l'extérieur de l'avion de transport AC, les risques de collision des munitions 3 avec ce dernier sont fortement diminués, et on obtient un domaine de largage plus étendu que les solutions usuelles.

En outre, l'extrémité arrière 18 du conteneur interne 4, qui comprend la partie de largage 7, est formée pour que l'étage inférieur 19 ne gêne pas le largage d'une munition 3 de l'étage supérieur 20, comme représenté sur la figure 2. Pour ce faire, les rails 10 sont fixés sur les côtés des compartiments 17 du conteneur interne 4.

Par ailleurs, ledit dispositif d'éjection 11 reste sur les rails 10 après le largage. Aussi, le système 1 comporte un jeu de rails 10 par munition 3. De plus, on peut utiliser un dispositif d'éjection 11 qui est similaire à un dispositif d'éjection usuel, employé sur un avion de chasse. Ceci permet, notamment, d'utiliser les points d'emport existants habituellement sur les munitions et limite donc les modifications à apporter à ces dernières.

## Revendications

1. Système d'emport de charge pour un avion de transport (AC), ledit système (1) comportant au moins un conteneur (4) dit interne qui est susceptible de recevoir au moins une charge (3), ledit système (1) comportant, de plus, un conteneur (15) dit externe qui est susceptible d'être fixé, directement et complètement, dans la soute (2) de l'avion de transport (AC), ledit conteneur interne (4) etant agencé dans ledit conteneur externe (15) de manière à pouvoir être déplacé longitudinalement et être amené de l'une à l'autre des positions suivantes :
- une première position (P1), dans laquelle il est entièrement situé à l'intérieur dudit conteneur externe (15) ; et
- une seconde position (P2), dans laquelle il est décalé longitudinalement vers l'arrière de l'aéronef (AC) par rapport à ladite première position (P1 ), de sorte qu'une partie (7) dudit conteneur interne (4) est alors située à l'extérieur dudit conteneur externe (15) et à l'extérieur de l'avion de transport (AC) au travers d'une ouverture (8) à l'arrière de la soute (2).

2. Système selon la revendication 1,
**caractérisé en ce que** ledit conteneur interne (4) est monté à l'intérieur dudit conteneur externe (15) à l'aide de premiers moyens de coulissement (6) qui sont susceptibles de déplacer ledit conteneur interne (4) entre lesdites première et seconde positions (P1, P2).

3. Système selon l'une des revendications 1 et 2,
**caractérisé en ce qu'**il comporte des seconds moyens de coulissement (5) qui sont susceptibles d'amener ladite charge (3) dans la partie (7) dudit conteneur interne (4) qui est située à l'extérieur de l'avion de transport (AC) dans ladite seconde position (P2).

4. Système selon l'une quelconque des revendications précédentes,
**caractérisé en ce que** ledit conteneur interne (4) comprend une cage (16) munie de compartiments (17) susceptibles de recevoir une pluralité de charges (3).

5. Système selon l'une quelconque des revendications précédentes,
**caractérisé en ce qu'**il comporte, de plus, un dispositif de commande qui est apte à commander au moins lesdits moyens de coulissement.

6. Système selon la revendication 3, qui est destiné à l'emport et au largage en vol d'au moins une charge (3),
**caractérisé en ce que** la partie (7) du conteneur interne (4), qui est située à l'extérieur de l'avion de transport (AC) dans ladite seconde position (P2), et dans laquelle est susceptible d'être amenée ladite charge (3) à l'aide desdits seconds moyens de coulissement (5), est une partie dite de largage, d'où la charge (3) peut être larguée de l'avion de transport (AC) en vol.

7. Système selon la revendication 6,
**caractérisé en ce que** lesdits seconds moyens de coulissement (5) comportent des rails (10) fixés sur le conteneur interne (4) et pourvus d'un dispositif d'éjection (11 ) qui est susceptible de coulisser sur lesdits rails (10) et qui est apte à supporter la charge (3) lors de l'emport et à la libérer lors du largage.

8. Système selon la revendication 7,
**caractérisé en ce que** les rails (10) sont fixés sur les côtés internes du conteneur interne (4).

9. Système selon l'une des revendications 6 à 8,
**caractérisé en ce qu'**il comporte, pour chaque charge (3), des seconds moyens de coulissement (5) dédiés.

10. Avion de transport,
**caractérisé en ce qu'**il comporte un système (1) d'emport de charge, tel que celui spécifié sous l'une quelconque des revendications 1 à 9.

## Claims

1. A load-carrying system for a transport airplane (AC), said system (1) comprising at least one so-called internal container (4) which is able to receive at least one load (3), said system (1) comprising in addition a so-called external container (15) which is able to be fastened, directly and completely, in the hold (2) of the transport airplane (AC), said internal container (4) being arranged within said external container (15) so as to be able to be moved longitudinally and to be brought from one to the other of the following positions:
- a first position (P1), in which it is completely located inside said external container (15); and
- a second position, in which it is longitudinally offset toward the rear of the aircraft (AC) with respect to said first position (P1), so that a part (7) of said internal container (4) is then located outside said external container (15) and outside the transport airplane (AC) through an opening (8) at the rear of the hold (2).

2. The system according to claim 1,
**characterized in that** said internal container (4) is mounted inside said external container (15) with the help of the first sliding means (6) which are able to move said internal container (4) between said first and second positions (P1, P2).

3. The system according to any of claims 1 and 2,
**characterized in that** it comprises second sliding means (5) which are able to bring said load (3) in the part (7) of said internal container (4) that is located outside the transport airplane (AC) in said second position (P2).

4. The system according to any of preceding claims,
**characterized in that** said internal container (4) comprises a cage (16) equipped with compartments (17) able to receive a plurality of loads (3).

5. The system according to any of preceding claims,
**characterized in that** said system comprises in addition a control device which is able to control at least said sliding means.

6. The system according to claim 3, provided for carrying and dropping in flight at least one load (3),
**characterized in that** the part (7) of the internal container (4), which is located outside the transport airplane (AC) in said second position (P2), and in which a load is able to be brought with the help of said second sliding means (5), is a so-called dropping part, whence the load (3) can be dropped from the transport airplane (AC) in flight.

7. The system according to claim 6,
**characterized in that** said second sliding means (5) comprise rails (10) fastened on the internal container (4) and provided with an ejection device (11) which is able to slide on said rails (10) and which is able to support the load (3) upon carrying and to release it upon dropping.

8. The system according to claim 7,
**characterized in that** the rails (10) are fastened on the internal sides of the internal container (4).

9. The system according to any of claims 6 to 8,
**characterized in that** it comprises, for each load (3), dedicated second sliding means (5).

10. A transport airplane,
**characterized in that** it comprises a load-carrying system (1), such as the one specified in any of claims 1 to 9.

## Patentansprüche

1. Haltesystem für Lasten für ein Transportflugzeug (AC), wobei das System (1) mindestens einen sogenannten inneren Behälter (4) aufweist, der imstande ist, mindestens einen Last (3) aufzunehmen, wobei das System (1) weiterhin einen sogenannten äußeren Behälter (15) aufweist, der imstande ist, direkt und vollständig im Frachtraum (2) des Transportflugzeugs (AC) befestigt zu sein, wobei der innere Behälter (4) derart im äußeren Behälter (15) ausgebildet ist, dass er längst verschiebbar und von der einen in die andere der folgenden Stellungen führbar ist:
- eine erste Stellung (P1), in der er sich vollständig im äußeren Behälter (15) befindet; und
- eine zweite Stellung (P2), in der er im Verhältnis zur ersten Stellung (P1) derart längs zum Heck des Flugzeugs (AC) verschoben ist, dass sich dann ein Teil (7) des inneren Behälters (4) außerhalb des äußeren Behälters (15) und außerhalb des Transportflugzeugs (AC) durch eine Öffnung (8) am Heck des Frachtraums (2) befindet.

2. System nach Anspruch 1,
**dadurch gekennzeichnet, dass** der innere Behälter (4) im äußeren Behälter (15) mit Hilfe von ersten Gleitmitteln (6) montiert ist, die imstande sind, den inneren Behälter (4) zwischen einer ersten und zweiten Stellung (P1, P2) zu bewegen.

3. System nach einem der Ansprüche 1 und 2,
**dadurch gekennzeichnet, dass** es zweite Gleitmittel (5) aufweist, die imstande sind, die Last (3) in den Teil (7) des inneren Behälters (4) zu führen, der sich außerhalb des Transportflugzeugs (AC) in der zweiten Stellung (P2) befindet.

4. System nach einem der vorangehenden Ansprüche, **dadurch gekennzeichnet, dass** der innere Behälter (4) einen Käfig (16) umfasst, der mit Abteilen (17) ausgestattet ist, die imstande sind, eine Vielzahl von Lasten (3) aufzunehmen.

5. System nach einem der vorangehenden Ansprüche, **dadurch gekennzeichnet, dass** es weiterhin eine Steuervorrichtung aufweist, die in der Lage ist, mindestens die Gleitmittel zu steuern.

6. System nach Anspruch 3, das zum Halten und zum Abwurf im Flug mindestens einer Last (3) bestimmt ist,
**dadurch gekennzeichnet, dass** der Teil (7) des inneren Behälters (4), der sich außerhalb des Transportflugzeugs (AC) in der zweiten Stellung (P2) befindet und in den die Last (3) mit Hilfe der zweiten Gleitmittel (5) führbar ist, ein sogenanntes Abwurfteil ist, von dem die Last (3) vom Transportflugzeug (AC) im Flug abgeworfen werden kann.

7. System nach Anspruch 6,
**dadurch gekennzeichnet, dass** die zweiten Gleitmittel (5) Schienen (10) aufweisen, die am inneren Behälter (4) befestigt sind und mit einer Auswurfvorrichtung (11) ausgestattet sind, die imstande ist, auf den Schienen (10) zu gleiten und die in der Lage ist, die Last (3) während des Haltens zu tragen und sie beim Abwurf freizugeben.

8. System nach Anspruch 7,
**dadurch gekennzeichnet, dass** die Schienen (10) an den Innenseiten des inneren Behälters (4) befestigt sind.

9. System nach einem der Ansprüche 6 bis 8,
**dadurch gekennzeichnet, dass** es für jede Last (3) zweite zweckgebundene Gleitmittel (5) aufweist.

10. Transportflugzeug,
**dadurch gekennzeichnet, dass** es ein wie in einem der Ansprüche 1 bis 9 spezifiziertes Lasthaltesystem (1 ) aufweist.
